# EUROPÄISCHE PATENTANMELDUNG

(11) **EP 2 236 816 A2**
(43) Veröffentlichungstag der Anmeldung: **06.10.2010**
(21) Anmeldenummer: 10003310.9
(22) Anmeldetag: 27.03.2010
(51) Int. Cl.: F03D 1/04

(54) **Kleinwindkraftanlage**

(30) Priorität: 31.03.2009 DE 102009015669
(71) Anmelder: EA Energiearchitektur GmbH, 01097 Dresden (DE)
(72) Erfinder: Döge, Klaus, Dr., 01279 Dresden (DE); Mikoleit, Beate, Dr., 01309 Dreseden (DE)
(74) Vertreter: Kaufmann, Sigfrid

(57) **Zusammenfassung**

Die Erfindung betrifft eine Kleinwindkraftanlage zur Montage in, an, auf oder zwischen Gebäuden, die sich dadurch auszeichnet, dass sie das Potenzial des Windes, das sich aus dem dynamischen Druck der Windgeschwindigkeit und der Druckdifferenz zwischen Luv- und Leeseite bzw. den Übergeschwindigkeiten bei der Umströmung von Gebäuden zusammensetzt, effektiv nutzt und hierbei außerdem die Entstehung und Weiterleitung von Schall und Schwingungen weitgehend verhindert. Durch seine im Verhältnis zum Laufraddurchmesser kurze axiale Länge und die mögliche Verwendung von plattenförmigen Elementen, aus denen das Gehäuse der Kleinwindkraftanlage aufgebaut ist, ergeben sich geringe Fertigungskosten und vielfältige Möglichkeiten zur Integration der Windkraftanlage in, an, auf oder zwischen Gebäuden.

## Beschreibung

Die Erfindung betrifft eine Kleinwindkraftanlage, die sich besonders für einen Einsatz in, an, auf oder zwischen Gebäuden eignet.

Aufgrund des Klimawandels, dem damit gestiegenen Umweltbewusstsein und den steigenden Preisen für Rohöl hat die Erzeugung von Elektroenergie aus Windenergie in den letzten Jahren stark an Bedeutung gewonnen. Windkraftanlagen leisten in windreichen Regionen mittlerweile einen großen Beitrag bei der Deckung des Grundbedarfs an elektrischer Energie.

Üblicherweise wird dieser Beitrag durch Windkraftanlagen, die meist in großer Anzahl in unmittelbarer Nähe zueinander aufgestellt werden und die sogenannte Windparks bilden, geleistet. Viele Menschen empfinden jedoch den Anblick solcher Windparks als störend.

Zudem werden die Windkraftanlagen, um die Windenergie ökonomisch zu nutzen, sehr groß ausgelegt. Das heißt, dass sie auf hohen Masten montiert werden, da die Windgeschwindigkeit und die damit verbundene Windenergie mit der Höhe zunehmen und dass sie mit großen Rotorblättern versehen werden. Infolgedessen können die Spitzen der Rotorblätter bei einer entsprechenden Stärke des Windes Geschwindigkeiten erreichen, die im Bereich der Schallgeschwindigkeit liegen. Hierdurch entstehen z. T. erhebliche Lärmbelastungen.

Weiterhin können bei ungünstigem Sonnenstand die Schlagschatten bzw. Reflexionen der Rotorblätter bei Anwohnern in der Nähe der Windkraftanlage psychische Störungen verursachen.

Durch ihre negativen Begleiterscheinungen (Verschandelung der Landschaft, starke Geräuschentwicklung, Hervorrufen von psychischen Störungen durch Stroboskopeffekt) werden Windkraftanlagen daher für gewöhnlich dezentral von bewohntem Gebiet, also im freien Gelände aufgestellt.

Durch ein wachsendes Umweltbewusstsein der Bevölkerung gibt es in neuerer Zeit verstärkt den Wunsch, die Windenergie auch privat zu nutzen. Die bisher üblichen, großen Windkraftanlagen sind dafür ungeeignet. Für Lösungen, die dem Wunsch nach privat nutzbaren Windkraftanlagen entsprechen, gibt es schon eine Reihe von technischen Lösungen.

In DE 9115618 U1 wird ein Windrad zur Energiegewinnung vorgestellt, das sich für die Platzierung auf Gebäuden eignet. Dieses Windrad stellt einen Darrieus-Rotor dar, der bevorzugt auf Schrägdächern montiert werden soll. Darrieus-Rotoren haben den Vorteil gegenüber Axial-Rotoren, dass sie unabhängig von der Windrichtung arbeiten können. Im Vergleich mit Axial-Rotoren mit horizontal liegender Rotationsachse hat der Darrieus-Rotor jedoch den entscheidenden Nachteil eines niedrigeren Wirkungsgrads.

In der Schrift DE 100 56 767 A1 wird eine Windkraftanlage mit an einem Gebäude angeordneten und in der Fassade integrierten achsnormal durchströmten Rotoren (Savonius-Rotoren) mit vertikaler Achse beschrieben. An den Längsseiten der Rotoren sind im Wesentlichen parallel zur Gebäudewand verlaufende, vorzugsweise schwenkbar in einem Drehgelenk gehaltene Luftleit-Fassadenelemente vorgesehen, die den Wind auffangen und dem Rotor verdichtet zuführen. Wie bei dem Darrieus-Rotor besteht ein Nachteil beim Savonius-Rotor darin, dass dieser im Vergleich mit Axial-Rotoren mit horizontal liegender Rotationsachse einen niedrigeren Wirkungsgradgrad besitzt. Zudem hat der Savonius-Rotor den Nachteil, dass er die Luft stärker verwirbelt als ein Axial-Rotor. Verwirbelungen von Luft sind jedoch immer eine Quelle für Geräuschentwicklung, die man in der unmittelbaren Nähe von Wohnräumen vermeiden möchte.

In DE 100 56 767 A1 wird eine Windturbine beschrieben, die im Dachstuhl eines Gebäudes eingebaut ist. Durch sich im rechten Winkel schneidende Luftkanäle soll gewährleistet werden, dass aus möglichst vielen Windrichtungen Windenergie genutzt werden kann. Der Nachteil besteht jedoch darin, dass der Einbau einer solchen Anlage in einem Dachstuhl, die Nutzung des selbigen als Wohnraum verhindert. Zudem kann die Anlage auch nur dann ihre volle Leistung erbringen, wenn die Windrichtung der Richtung des Windkanals entspricht.

Eine weitere Möglichkeit, die Windenergie im Bereich von Gebäuden auszunutzen, wird in US 6 041 596 A offenbart. Gemäß der Erfindung werden Gebäude winklig zueinander gebaut, sodass zwischen den Gebäuden ein tunnelartiger Kanal entsteht, in dem eine Windturbine eingebaut ist. Durch die winklig zueinander stehenden Gebäude wird der Wind eingefangen und zum Tunnel hin verdichtet. Nachteilig ist allerdings, dass in den seltensten Fällen schon vorhandene Gebäude so stehen, dass eine solche Windkraftanlage sinnvoll nachgerüstet werden könnte; sie eignet sich primär für entsprechend geplante Gebäudekomplexe.

In US 2008/0315592 A1 werden Gehäuse-Windturbinen zur Montage auf Hausdächern gezeigt, bei denen das Laufrad im Zentrum eines Planetengetriebes angeordnet ist. Das Planetengetriebe dient einerseits zur Kraftübertragung und andererseits zur Führung des Laufrades. Zu beiden Seiten des Laufrades sind Windleitelemente, die trichterförmig ausgeformt und parabelförmig gebogen sind und die sich jeweils zum Laufrad in verjüngen, angebracht. Die gesamte Anordnung wird von einem kastenförmigen Gehäuse umschlossen.

Die Herstellung der gebogenen Windleitelemente ist aufwendig und teuer. Außerdem wird die für die Gewinnung der Windenergie wirksame Anströmfläche gegenüber der Anströmfläche des Gehäuses verringert. Als Laufrad kommt ein Westernrad zum Einsatz, mit dem lediglich ein vergleichsweise geringer Anteil der Windenergie in mechanische Energie umgewandelt werden kann.

Auf der Messe "Husum WindEnergy" wurde im März 2009 von der Firma "Elektro-Klaas" die Kleinwindkraftanlage "HEVA 0.8" vorgestellt. Durch Anwendung eines Diffusors in Profilform eines Flugzeugflügels und spezieller Oberflächenbeschichtung soll in der Turbine eine deutlich höhere Windgeschwindigkeit und damit eine höhere Energieausbeute erzielt werden. Sie soll baugenehmigungsfrei und daher besonders geeignet sein für den Einsatz im privaten Bereich.

Des Weiteren sind durch die Arizona State University Windkraftanlagen bekannt, die an Dachkanten von Gebäuden aufgestellt werden. Diese Anlagen verfügen über ein weiteres Dach, welches den an der Gebäudefront aufströmenden Wind in den Rotor lenkt und so die Windausbeute erhöht.

Die Aussage, dass axiale schnell drehende Windturbinen die höchste Energieausbeute des Windes ermöglichen, kann aus der Fachliteratur (u. a. Gasch, R., Twele, J.: Windkraftanlagen. B. G. Teubner Verlag, Wiesbaden 2007) entnommen werden. Danach können, bezogen auf die Rotorfläche normal zur Windgeschwindigkeit, axiale Windturbinen knapp 50%, Darrieus-Rotoren etwa 30% und Savonius-Rotoren etwa 20% der Windenergie nutzen.

Aufgabe der Erfindung ist es, die aufgezeigten Nachteile des Standes der Technik zu beseitigen. Insbesondere soll eine Kleinwindkraftanlage geschaffen werden, die in vielfältiger Weise in, an, auf oder zwischen bestehenden Gebäuden nachgerüstet werden kann. Zudem soll die Kleinwindkraftanlage einfacher aufgebaut und leistungsfähiger als bisherige Kleinwindkraftanlagen sein.

Erfindungsgemäß wird die Aufgabe durch die Merkmale des Patentanspruchs 1 gelöst; vorteilhafte Ausgestaltungen sind in den abhängigen Ansprüchen aufgezeigt.

Dem entsprechend betrifft die Erfindung eine Kleinwindkraftanlage zur Montage in, an oder auf Gebäuden, die ein axiales Laufrad, bestehend aus einer Laufradnabe und Laufradschaufeln, besitzt, um das ein Gehäuse mit rechteckförmigem, bevorzugt quadratischem Querschnitt, dessen Bestandteile eine Bodenplatte, Seitenwände und ein Dach sind, angeordnet ist. Das Gehäuse dient nicht nur, wie sonst üblich, zur Befestigung der Laufrads am Gebäude und zum Schutz der darin befindlichen Komponenten, sondern auch zur Führung des Luftstroms. Aufgrund seines rechteckförmigen Querschnitts kann das Gehäuse außerdem gut in verschiedenste Gebäudestrukturen integriert werden.

Als Laufrad wird bevorzugt ein (axiales, da die Strömungsrichtung und die Windrichtung im Normalbetrieb der Kleinwindkraftanlage identisch sind) Laufrad verwendet, das dieselbe Bauform aufweist wie die in freistehenden Windkraftanlagen eingesetzten Laufräder. Mit solchen Laufrädern als Bestandteil schnell laufender Turbinen wird Windenergie mit einem wesentlich besseren Wirkungsgrad in mechanische und schließlich elektrische Energie umgewandelt als mit Laufrädern (z.B. Westernrad), wie sie in Verbindung mit langsam laufenden Turbinen eingesetzt werden.

In der Rotationsebene des Laufrades befinden sich eine Blende und ein Ring. Diese füllen den Bereich aus (keine Spalte), der sich zwischen der vom Laufrad überstrichenen Fläche und dem Gehäuse befindet, wobei der Ring das Laufrad in der Rotationsebene umschließt und mit der Blende verbunden ist. Bei kleinen Laufraddurchmessern treibt das Laufrad über eine Welle einen Generator, der über einen Schwingungsdämpfer und einem Auflager in Säulen- oder Querträgerform mit dem Gehäuse verbunden ist, direkt an.

Der Ring, der mit der Blende verbunden ist und das Laufrad möglichst eng umschließt, verhindert, dass das axiale Laufrad vom Wind umströmt wird. Durch Umströmungen an den Laufradschaufeln eines freien Laufrades entstehen an den Spitzen der Laufradschaufeln Endwirbel und damit verbundene Druckfelder, die zu Leistungsverlust und Geräuschbelastung führen. Der Ring verhindert die Ausbildung von Endwirbeln um die äußeren Enden der Laufradschaufeln, die infolge des Druckunterschiedes zwischen Druck- und Saugseite der Schaufelprofile entstehen. An Stelle der freien Umströmung der Laufschaufelspitzen treten zwar sogenannte Spaltwirbel auf, deren Intensität ist jedoch im Vergleich mit denen der Endwirbel sehr gering und nimmt mit Verringerung der Spaltweite weiter ab. Daher wird der Abstand zwischen Laufradschaufelspitze und dem Ring erfindungsgemäß möglichst klein gewählt. Damit der Ring seine volle Wirkung entfalten kann, ist es notwendig, dass dieser eine axiale Länge aufweist, die mindestens genauso groß ist wie die axiale Erstreckung der Laufradschaufeln, wobei sich der Ring und die Laufradschaufeln zudem in einer Ebene (Koplanarität) befinden. Eine Vergrößerung der axialen Länge des Ringes über die Laufradschaufeln hinaus oder eine Neigung des Ringes zur Achse hätte nur wenig Einfluss auf die Laufradströmung, da die axiale Erstreckung des Ringes im Vergleich zum Durchmesser des Laufrades sehr gering ist. Zur Verbesserung der Strömungseigenschaften ist es weiterhin vorteilhaft, den Ring sowohl auf der Luv- als auch auf der Leeseite strömungsoptimiert abzurunden.

Die Blende trennt Zu- und Abströmseite der Kleinwindkraftanlage. Bei den Kleinwindkraftanlagen, die für einen Einsatz an oder zwischen Gebäuden vorgesehen sind und die folglich vom Wind meistens frontal und geradlinig angeströmt werden, wird der Durchmesser des lichten Querschnitts des Ringes und dementsprechend der Durchmesser des Rotors bevorzugt nur geringfügig kleiner gewählt, als die Länge der kürzeren der beiden Kanten des Gehäuses, die die Querschnittsfläche des Gehäuses begrenzen. Auf diese Weise bleibt die gesamte Windanströmfläche des Gehäuses genutzt; bei einem Gehäuse mit quadratischem Querschnitt beträgt das Verhältnis der achsnormalen Fläche der Blende zum lichten Querschnitt des Ringes im Idealfall (unendlich dünner Ring, Aussparung grenzt direkt an das Gehäuse) π/4 (0,784); im Realfall ist das Verhältnis jedoch etwas kleiner, da, um die Kleinwindkraftanlage möglichst einfach und stabil aufzubauen, üblicherweise der Durchbruch nicht direkt ans Gehäuse grenzt (in diesem Fall bestände die Blende nicht aus einem, sondern aus vier einzelnen Stücken) und auch der Ring aus Stabilitätsgründen eine bestimmte Dicke aufweisen muss.

Bei den Kleinwindkraftanlagen, die für einen Einsatz auf Gebäuden vorgesehen sind, und die folglich meistens von einem an der Fassade des Gebäudes hoch strömenden Aufwind, also von einem Wind der das Gehäuse nicht gerade von vorn sondern von schräg unten erreicht, angeströmt werden, wird bevorzugt der der Durchmesser des lichten Querschnitts des Ringes kleiner ist als die Länge der kürzeren der beiden Kanten, die Querschnittsfläche des Gehäuses begrenzen, gewählt. Dabei soll allerdings das Verhältnis der achsnormalen Fläche der Blende zum lichten Querschnitt des Ringes nicht weniger als 0,5 betragen.

Bei beiden Ausführungsformen ist eine ausreichende Verzögerung vom Laufradquerschnitt zur Abströmung gesichert. Es hat sich gezeigt, dass bei der hierdurch erreichten starken Querschnitterweiterung stromab von Windturbinenlaufrädern keine Diffusoren größerer Länge erforderlich sind. Üblicherweise haben verlustarme ablösungsfreie Diffusoren mit einem Übergang von einem runden auf einen eckigen Querschnitt bei einem Flächenverhältnis von 1,5 eine axiale Länge von etwa dem 2-fachen des Durchmessers. Solche Diffusoren sind bei der vorliegenden Erfindung nicht mehr notwendig. Die Kleinwindkraftanlage weist infolgedessen eine kurze axiale Länge auf, was im Vergleich zum Stand der Technik zu einer nachhaltigen Kostenreduzierung führt.

Bei den Kleinwindkraftanlagen, die für eine Installation in, an oder zwischen Gebäuden vorgesehen sind, sind deshalb die beiden Seitenwände, das Dach und die Bodenplatte des Gehäuses, die jeweils parallel verlaufen und gleich lang sind, kürzer als der Durchmesser des Laufrades.

Bei Kleinwindkraftanlagen die für eine Installation auf Gebäuden vorgesehen sind, steht hingegen das Dach des Gehäuses jeweils auf der Luvseite weiter und auf Leeseite kürzer über der Blende über als die Bodenplatte. Die Blende ist dabei ungefähr mittig auf der Bodenplatte angeordnet. Außerdem ist es vorgesehen das Dach und die Seitenwände des Gehäuses so anzuordnen, dass sie beim Aufstellen der Kleinwindkraftanlage über der Dachkante des Gebäudes hervorstehen. Hierdurch werden die Luftströmungen, die vor dem Laufrad üblicherweise eine Vertikalkomponente nach oben besitzen (Aufwinde an der Gebäudefront) besonders effektiv aufgefangen. Auf der Abströmseite der Blende ist das Dach wesentlich kürzer ausgeführt und dient hauptsächlich dem Wetterschutz.

Die Blende bewirkt außerdem eine Verbesserung der Axialsymmetrie der Strömung durch das Laufrad. Damit vermindert sich die Intensität der Anfahrwirbel, die entstehen, wenn sich die Axialgeschwindigkeit bei einer Umdrehung ändert. Die Reduzierung der Intensität der Anfahrwirbel bewirkt auch eine deutliche Reduzierung der Schallabstrahlung und der mechanischen Schwingungen.

Eine weitere Verbesserung des Wirkungsgrads der Kleinwindkraftanlage, die allerdings auch mit einem etwas höheren Material- und Fertigungsaufwand verbunden ist, kann dadurch erreicht werden, dass vor der Blende Einbauten zur Strömungslenkung derart angebracht sind, dass sie eine stetige Verringerung des Strömungsquerschnittes beginnend vom größeren rechteckförmigen Querschnitt des Gehäuses auf den kleineren runden Querschnitt des Ringes gewährleisten. Entsprechend können hinter der Blende auch noch Einbauten zur Strömungslenkung angebracht sein, die eine stetige Aufweitungen des Strömungsquerschnittes beginnend vom runden Querschnitt des Ringes auf den größeren rechteckförmigen Querschnitt des Gehäuses bewirken. Durch die Einbauten wird der Bildung von Wirbeln, die sich sowohl aus der Luv- als auch auf der Leeseite der Blende ausbilden können und die geringere Leistungsverluste verursachen, entgegengewirkt.

Weiter ist es vorgesehen, dass sich zwischen Generator und Gehäuse schwingungs- und vibrationsentkoppelnde Elemente befinden, die vermeiden, dass Schwingungen und Vibrationen in die Gebäudesubstanz übertragen werden.

Eine Ausführungsvariante der erfindungsgemäßen Kleinwindkraftanlage sieht vor, dass zur Sicherung gegen Schaden bei großen Windgeschwindigkeiten zwischen Laufrad und Gehäuse ein Drehgelenk eingebaut ist, welches es ermöglicht, das Laufrad aus dem Wind zu kippen. Bei großen Windgeschwindigkeiten wird durch die auf die Laufradschaufeln wirkende axiale Kraft so groß, dass sie das Moment der Gewichtskraft des Laufrades und nachrangiger Komponenten überwindet und das Laufrad um einen Winkel von bevorzugt 30° kippt, sodass es in die sog. "Helikopterstellung" geht. Dadurch vermindert sich die Umfangskraft, wodurch die Drehzahl des Laufrades und folglich die des Generators begrenzt werden. Wird das Laufrad kippbar ausgeführt, so muss der Ring in seiner Form derart angepasst werden, dass die Laufradschaufeln beim Kippvorgang den Ring nicht berühren können.

Es ist auch vorgesehen, die Kleinwindkraftanlage insgesamt drehbar zu lagern, sodass sie im Bereich der nutzbaren Windrichtungen immer direkt in den Wind gedreht werden. Dadurch kann die Windenergie immer bestmöglich ausgenutzt werden. Besonders vorteilhaft ist, wenn der Drehpunkt bei nebeneinander aufgestellten Kleinwindkraftanlagen in einen Eckpunkt der Bodenplatte gelegt wird. Dadurch können die Kleinwindkraftanlagen dicht nebeneinander aufgestellt werden; die nutzbare Dachfläche kann so optimal genutzt werden. Weiterhin kann es zweckmäßig sein, mehrere Kleinwindkraftanlagen übereinander zu montieren.

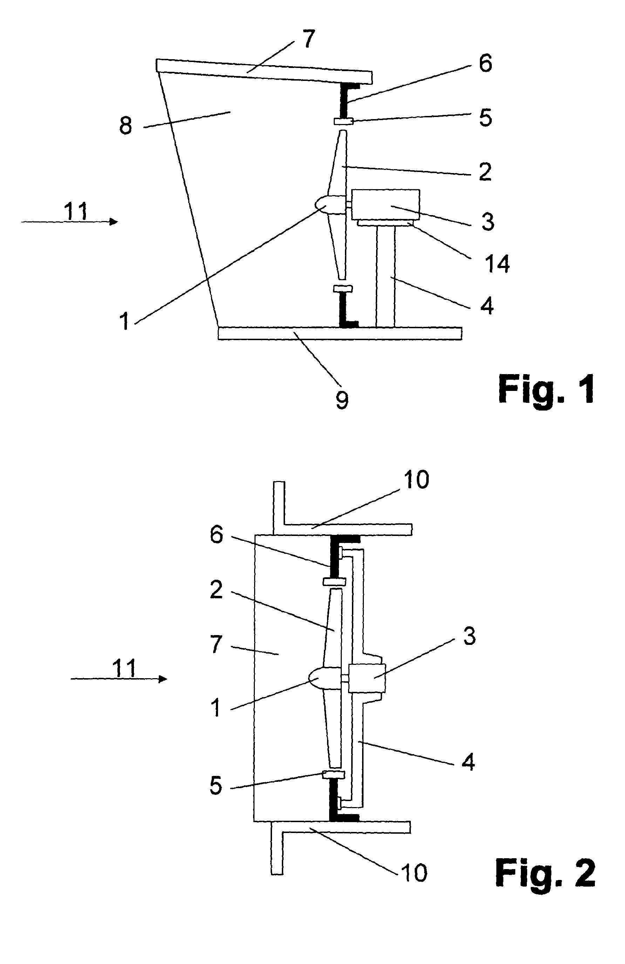

Ein Ausführungsbeispiel wird im Folgenden anhand der Fig. 1 der beigefügten Zeichnungen erläutert.

Fig. 1 zeigt eine Kleinwindkraftanlage von der Seite im Vertikalschnitt. Zu erkennen sind die Bodenplatte 9 und das Dach 7, welches von den Seitenwänden 8 und der Blende 6 gehalten wird. Das Dach 7 fällt von der Vorderseite der Windkraftanlage nach hinten hin leicht ab, zudem steht es vorn über die Bodenplatte 9 hinaus. Dadurch wird erreicht, dass bei einer Montage der Kleinwindkraftanlage an einer Dachkante der an der Gebäudewand aufsteigende Wind unter dem Dach 7 gefangen wird und zum Laufrad, welches aus der Laufradnabe 1 und den Laufradschaufeln 2 besteht, geleitet wird. Das Laufrad befindet sich in einer Ebene mit der Blende 6 und dem Ring 5, der mit der Blende 6 verbunden ist und das Laufrad umschließt. Die Welle des Generators 3 ist direkt mit dem Laufrad verbunden. Zwischen dem Auflager 4 und dem Generator 3 befindet sich ein schwingungs- und vibrationsentkoppelndes Element 14. Das Auflager 4 ist mit der Bodenplatte 9 verbunden. Die Windrichtung 11 zeigt frontal auf das Windrad; in diesem Fall erzielt die Kleinwindkraftanlage ihre maximale Leistung.

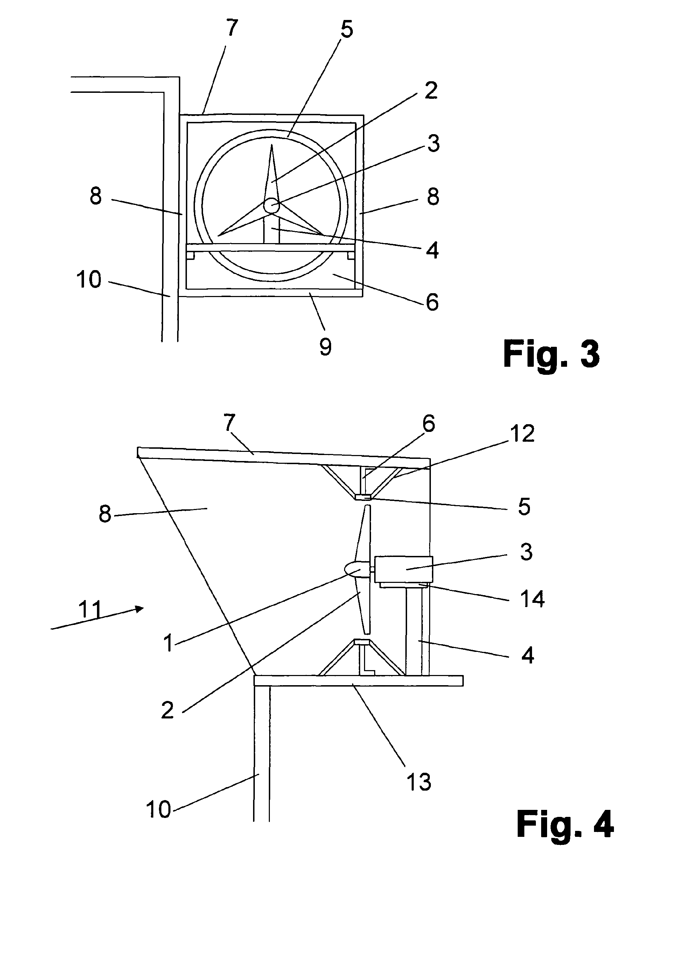

### Weitere Ausführungsvarianten der Erfindung zeigen die Fig. 2 bis Fig. 4, nämlich:

- Fig. 2: eine Kleinwindkraftanlage im Horizontalschnitt, die zwischen zwei Gebäuden mit den Wänden 10 eingebaut ist;
- Fig. 3: eine Kleinwindkraftanlage im Vertikalschnitt, die an einer Außenfassade eines Gebäudes montiert ist und
- Fig. 4: eine auf einem Flachdach 13 installierte Kleinwindkraftanlage mit Einbauten 12 zur Strömungslenkung vor und hinter der Blende 6 von der Seite im Vertikalschnitt.

### Liste der verwendeten Bezugszeichen

- 1: Laufradnabe
- 2: Laufschaufel
- 3: Generator
- 4: Auflager
- 5: Ring
- 6: Blende
- 7: Dach
- 8: Seitenwände
- 9: Bodenplatte
- 10: Gebäudewand
- 11: Windrichtung
- 12: Einbauten
- 13: Gebäudedach
- 14: schwingungs- und vibrationsentkoppelndes Element

## Patentansprüche

1. Kleinwindkraftanlage bestehend aus einer Laufradnabe (1) und Laufschaufeln (2) eines axialen Laufrades, einem Generator (3), einem Auflager (4) und einem Gehäuse bestehend aus einer Bodenplatte (9), Seitenwänden (8) und einem Dach (7), die in, an, auf oder zwischen Gebäuden installiert wird, **dadurch gekennzeichnet, dass** das zur Führung der Luftströmung dienende Gehäuse, einen rechteckförmigen Querschnitt hat, wobei im Gehäuse eine senkrecht zur Luftströmung verlaufende Blende (6) angeordnet ist, die einen mittig eingebrachten, kreisrunden Durchbruch aufweist und die sich, mit Ausnahme des Durchbruchs, spaltlos über die gesamte Querschnittsfläche des Gehäuses erstreckt, wobei in den Durchbruch ein zylindrischer Ring (5) eingebracht ist, dessen Außenseite spaltlos mit der Blende (6) verbunden ist und dessen axiale Länge mindestens gleich groß ist wie die Dicke der Blende (6), wobei das axiale Laufrad in der Ebene der Blende (6) und innerhalb des Rings (5) angeordnet ist, und die Länge der Laufschaufeln (2) so gewählt ist, dass der Ring (5) das Laufrad eng umschließt.

2. Kleinwindkraftanlage nach Anspruch 1, **dadurch gekennzeichnet, dass** ein Laufrad verwendet ist, das dieselbe Bauform aufweist, wie die Laufräder von freistehenden Windkraftanlagen.

3. Kleinwindkraftanlage nach Anspruch 1 und 2, **dadurch gekennzeichnet, dass** der Ring (5) am Ein- und Austritt nach der Strömung abgerundet und seine axiale Länge gleich oder größer als die axiale Erstreckung der Laufschaufeln (2) im Außenschnitt ist.

4. Kleinwindkraftanlage nach Anspruch 1 bis 3, **dadurch gekennzeichnet, dass** der Durchmesser des lichten Querschnitts des Ringes (5) nur geringfügig kleiner ist als die Länge der kürzeren der beiden Kanten des Gehäuses, die die Querschnittsfläche des Gehäuses begrenzen.

5. Kleinwindkraftanlage nach Anspruch 1 bis 3, **dadurch gekennzeichnet, dass** der Durchmesser des lichten Querschnitts des Ringes (5) kleiner ist als die Länge der kürzeren der beiden Kanten des Gehäuses, die die Querschnittsfläche des Gehäuses begrenzen, wobei das Verhältnis der achsnormalen Fläche der Blende (6) zum lichten Querschnitt des Ringes (5) größer als 0,5 ist.

6. Kleinwindkraftanlage nach Anspruch 1 bis 5, **dadurch gekennzeichnet, dass** vor der Blende (6) Einbauten (12) zur Strömungslenkung derart angebracht sind, dass sie eine stetige Verringerung des Strömungsquerschnittes beginnend vom größeren rechteckförmigen Querschnitt des Gehäuses auf den kleineren runden Querschnitt des Ringes (5) gewährleisten und/oder hinter der Blende (6) Einbauten (12) zur Strömungslenkung so angebracht sind, dass eine stetige Aufweitungen des Strömungsquerschnittes beginnend vom runden Querschnitt des Ringes (5) auf den größeren rechteckförmigen Querschnitt des Gehäuses erreicht wird.

7. Kleinwindkraftanlage nach Anspruch 1 bis 6, **dadurch gekennzeichnet, dass** sie für eine Installation auf Gebäuden vorgesehen ist, und das Dach des Gehäuses auf der Luvseite weiter und auf Leeseite kürzer über der Blende (6) übersteht als die Bodenplatte (9), wobei die Blende ungefähr mittig auf der Bodenplatte (9) angeordnet ist.

8. Kleinwindkraftanlage nach Anspruch 7, **dadurch gekennzeichnet, dass** das Dach (7) des Gehäuses bei horizontaler Ausrichtung der Anlage luvseitig zur Blende (6) hin abfällt.

9. Kleinwindkraftanlage nach Anspruch 1 bis 8, **dadurch gekennzeichnet, dass** das Dach (7), eine oder beide Seitenwände (8) oder die Bodenplatte (9) Bestandteil vom Gebäude selbst sind.

10. Kleinwindkraftanlage nach Anspruch 1 bis 9, **dadurch gekennzeichnet, dass** sich zwischen dem Generator (3) und dem Gehäuse schwingungs- und vibrationsentkoppelnde Elemente (14) befinden.

11. Kleinwindkraftanlage nach Anspruch 1 bis 10, **dadurch gekennzeichnet, dass** sich dass Laufrad aus der Strömung des Windes kippen lässt.

12. Kleinwindkraftanlage nach Anspruch 1 bis 11, **dadurch gekennzeichnet, dass** die Kleinwindkraftanlage drehbar gelagert ist.

13. Kleinwindkraftanlage nach Anspruch 12, **dadurch gekennzeichnet, dass** die Kleinwindkraftanlage in einem der Eckpunkte der Bodenplatte (9) drehbar gelagert ist.

14. Kleinwindkraftanlage nach Anspruch 1 und einem der vorstehenden Ansprüche, **dadurch gekennzeichnet, dass** das Dach (7) des Gehäuses, wenn die Kleinwindkraftanlage auf einem Dach eines Gebäudes steht oder zwischen zwei Gebäuden montiert ist, über die Dachkante des Gebäudes hinausragt.
